(19) Europäisches Patentamt
European Patent Office
Office européen des brevets

(11) **EP 3 274 209 B1**

(12) **FASCICULE DE BREVET EUROPEEN**

(45) Date de publication et mention
de la délivrance du brevet:
**31.07.2019 Bulletin 2019/31**

(21) Numéro de dépôt: **16713557.3**

(22) Date de dépôt: **18.03.2016**

(51) Int Cl.:
**B60K 35/00** *(2006.01)* **G02B 27/01** *(2006.01)*
**G01C 21/26** *(2006.01)* **G01C 21/36** *(2006.01)*

(86) Numéro de dépôt international:
**PCT/FR2016/050605**

(87) Numéro de publication internationale:
**WO 2016/151220 (29.09.2016 Gazette 2016/39)**

(54) **SYSTÈME D'AIDE A LA NAVIGATION**

SYSTEM ZUR UNTERSTÜTZUNG DER NAVIGATION

SYSTEM FOR AIDING NAVIGATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.03.2015 FR 1552438**

(43) Date de publication de la demande:
**31.01.2018 Bulletin 2018/05**

(73) Titulaire: **Renault S.A.S.**
**92100 Boulogne-Billancourt (FR)**

(72) Inventeurs:
• **REGNIER, Stephane**
**91370 Verrieres Le Buisson (FR)**
• **HAUE, Jean-Baptiste**
**92350 Le Plessis Robinson (FR)**

(56) Documents cités:
**EP-A1- 1 484 234     WO-A1-2015/001665
JP-A- 2006 331 040     JP-A- 2010 204 795
US-A- 5 964 821     US-A1- 2009 231 116**

**Description**

L'invention concerne un système d'aide à la navigation pour véhicule automobile, et plus particulièrement un système d'aide à la navigation lors d'un changement de direction d'une première direction vers une deuxième direction.

L'invention s'applique notamment en complément des systèmes d'aide à la navigation et est destinée à minimiser la charge cognitive nécessaire à l'acquisition et à l'interprétation de l'information par le conducteur et à améliorer la prestation de navigation en cas de perte momentanée du signal GPS (« Global Positioning System ») ou d'indication imprécise.

Les systèmes d'aide à navigation comprennent généralement au moins une cartographie terrestre, un récepteur des signaux GPS, un calculateur de navigation destiné à fournir en continu au conducteur diverses informations de navigation basées sur les signaux GPS reçus : délai d'arrivée, distance restant à parcourir, prochain changement d'orientation ou de route, nom et numéro de route actuelle, etc. ; et un dispositif d'affichage apte à restituer les informations de navigation au conducteur. On connait par exemple le document US5964821A qui décrit un écran de guidage de navigation affichant des pointeurs directionnels sous forme de flèches.

Cependant, les signaux GPS possèdent souvent une précision insuffisante, par exemple 5 à 10 mètres, pour donner une indication suffisamment claire au conducteur en cas d'un changement complexe de voie : échangeurs à entrées et/ou sorties multiples, voies parallèles ou se séparant en deux, rond-points à sorties multiples et proches les unes des autre, etc.

Par ailleurs, les signaux GPS ne sont pas complètement en temps-réel. Compte-tenu de la vitesse de déplacement du véhicule et du temps de traitement par le système d'aide à la navigation, il existe un décalage temporel entre la réception de signaux GPS et l'affichage de la position du véhicule au conducteur. Par conséquent, la position indiquée par le système d'aide à la navigation est toujours en retard par rapport à la position réelle du véhicule.

En outre, il peut arriver que l'on reçoit des signaux GPS dégradés ou faussés (rebonds des signaux GPS sur une façade en ville), voire que l'on perde temporellement (par exemple dans un tunnel) les signaux GPS. Dans ce dernier cas, la position du véhicule ne peut plus être calculée autrement que par un principe d'extrapolation.

Dans les situations limites d'embranchement, les imprécisions des systèmes d'aide à la navigation citées ci-dessus peuvent mener à une confusion quant à la voie sur laquelle le véhicule se situe ou celle que le conducteur doit prendre.

De plus, le dispositif d'affichage du système d'aide à la navigation affiche une cartographie en général simplifiée via un écran intégré dans un véhicule ou dans un dispositif mobile, par exemple un navigateur GPS mobile ou un smartphone avec une application de navigation. En dépit des progrès constatés sur les affichages proposés en 2D ou en 3D, ils présentent cependant toujours certaines limites :

- ils ne peuvent pas compenser efficacement l'imprécision du système d'aide à la navigation,
- ils rentrent en compétition avec la surveillance visuelle et la charge cognitive nécessaire à la gestion d'une situation de conduite complexe, par exemple dans une situation « échangeur » ou « rond-point », et
- la localisation de cet écran dans le véhicule n'est pas toujours optimale pour la prise d'information. En effet, les systèmes d'aide à la navigation sont souvent placés sur la console centrale du véhicule, située entre le conducteur et le passager, qui nécessite un « détournement de regard » du conducteur pour la prise d'information.

Selon un mode de réalisation, il est proposé un système d'aide à la navigation basé sur un calcul continu et pouvant continuer à fournir une vision particulièrement stable d'une prochaine direction à prendre, même en cas de perte momentanée des signaux GPS ou d'indication imprécise.

Selon un autre mode de réalisation, il est proposé un système d'aide à la navigation comprenant un dispositif de restitution visuelle configuré pour viser en permanence un point de l'horizon, de manière analogue à une boussole et éclairer en continu un composant d'éclairage correspondant à la direction de ce point de l'horizon par rapport à l'axe de conduite, tout en assurant que l'acquisition et l'interprétation de cette information visuelle par le conducteur restent particulièrement simples, intuitives et efficaces.

Ainsi, il est proposé un système d'aide à la navigation lors d'un changement de direction d'une première direction vers une deuxième direction, comprenant un dispositif de calcul d'angle cible comportant au moins une cartographie terrestre, un capteur d'orientation et un calculateur apte à calculer un angle cible entre la position instantanée du véhicule et un point fixe de la cartographie terrestre situé dans la deuxième direction, ledit système comprenant en outre un dispositif de restitution visuelle, recevant l'angle cible et comportant une zone d'éclairage sensiblement linéaire située au sein du véhicule dans le champ de vision principal ou périphérique du conducteur, l'information visuelle produite par la zone d'éclairage étant adaptée pour indiquer en continu la direction vers ledit point fixe en fonction de la valeur de l'angle cible, le dispositif de restitution visuelle étant activé uniquement lorsqu'un délai est inférieur à un seuil, ledit délai correspondant au temps restant avant le changement de direction et étant calculé par un calculateur en utilisant des informations odométriques.

Selon une variante de l'invention, le dispositif de calcul d'angle cible peut être également implémenté dans un dispositif mobile, par exemple un smartphone ou une tablette, relié à un réseau du véhicule, Bluetooth ou MirrorLink par exemple.

Par ailleurs, la zone d'éclairage du dispositif de restitution visuelle peut être installée en partie supérieure de la planche de bord du véhicule et en partie supérieure du panneau de porte du conducteur et configurée pour couvrir un champ visuel d'au moins 90°. Le champ visuel correspondant au champ de vision périphérique dans lequel le conducteur perçoit des informations peut être d'au moins 150°.

La zone d'éclairage du dispositif de restitution visuelle peut comporter par exemple une pluralité de composants d'éclairage individuels. Le dispositif de restitution visuelle peut être adapté pour commander l'éclairage instantané du seul composant d'éclairage individuel correspondant à la direction instantanée vers le point fixe.

La lumière produite par la zone d'éclairage doit simplement être perceptible dans toutes les situations de conduites et sans perturber le conducteur dans ses tâches de conduite.

En outre, les composants d'éclairage du dispositif de restitution visuelle peuvent être à base de LEDs et d'un diffuseur optique. Un tel système permet de bien dimensionner et de maitriser le flux lumineux émis par le dispositif.

En variante, la zone d'éclairage du dispositif de restitution visuelle peut comprendre un cadran ou un demi-cadran sectorisé par une pluralité de cases représentant au moins un angle compris entre -90° et 90° et affiché sur un écran de préférence le tableau de bord ou un affichage tête haute, ou dans un dispositif mobile relié à un réseau du véhicule, Bluetooth ou MirrorLink par exemple.

Dans une implémentation optimale, un capteur de lumière peut être installé dans le véhicule et configuré pour moduler l'intensité lumineuse de la zone d'éclairage du dispositif de restitution visuelle suivant le flux lumineux reçu de l'extérieur, par exemple différentes situations de jour ou de nuit, d'éblouissement, etc.

Selon un autre aspect de l'invention, il est proposé un procédé d'aide à la navigation lors d'un changement de direction d'une première direction vers une deuxième direction, dans lequel on définit sur une cartographie terrestre un premier point fixe au croisement du changement de direction et un deuxième point fixe à une distance déterminée du premier point dans la deuxième direction, on calcule un angle cible instantané entre la position instantanée du véhicule et le deuxième point fixe, et on éclaire une zone d'éclairage spécifique au sein du véhicule, correspondant à l'angle cible instantané dans le champ de vision principal ou périphérique du conducteur, et on définit un délai correspondant au temps restant avant le changement de direction, en utilisant des informations odométriques et on active le dispositif de restitution visuelle uniquement lorsque ledit délai est inférieur à un seuil.

L'utilisation de ce seuil de déclenchement temporel permet de prendre compte la vitesse de véhicule. Plus le véhicule se déplace vite, par exemple en déplacement sur voie rapide, plus le dispositif de restitution visuelle est activé tôt. Inversement, le dispositif est activé tard lorsque le déplacement du véhicule est lent, par exemple en ville. Ce principe est cohérent avec une prise en compte de la charge cognitive du conducteur et une telle configuration permet de rendre le système d'aide à la navigation le moins perturbant possible au conducteur.

On peut éclairer et faire clignoter une zone d'extrémité à l'extérieur de la zone d'éclairage du dispositif de restitution visuelle tant que la valeur absolue de l'angle cible instantané est supérieure à l'angle maximum du champ visuel couvert par la zone d'éclairage, et on peut éclairer une zone de la zone d'éclairage angulairement la plus proche de l'angle cible dans les autres cas, lorsque le dispositif de restitution visuelle est activé.

D'autres avantages et caractéristiques de l'invention apparaîtront à l'étude de la description détaillée de modes de réalisation, pris à titre d'exemples non limitatifs et illustrés par les dessins annexés sur lesquels :

- La figure 1 est un schéma bloc du système d'aide à la navigation lors d'un changement de direction d'une première direction vers une deuxième direction selon l'invention ;
- Les figures 2a et 2b sont relatives à une définition des paramètres pour le calcul d'angle cible selon l'invention ;
- La figure 3 illustre une intégration type du dispositif de restitution visuelle installé en partie supérieure de la planche de bord du véhicule et en partie supérieure du panneau de porte du conducteur selon l'invention ;
- Les figures 4 à 6 illustrent de manière schématique différentes étapes d'indication du dispositif de restitution visuelle pendant un changement de direction selon l'invention ; et
- La figure 7 illustre un exemple de cadran permettant de représenter l'angle cible sur un écran selon l'invention.

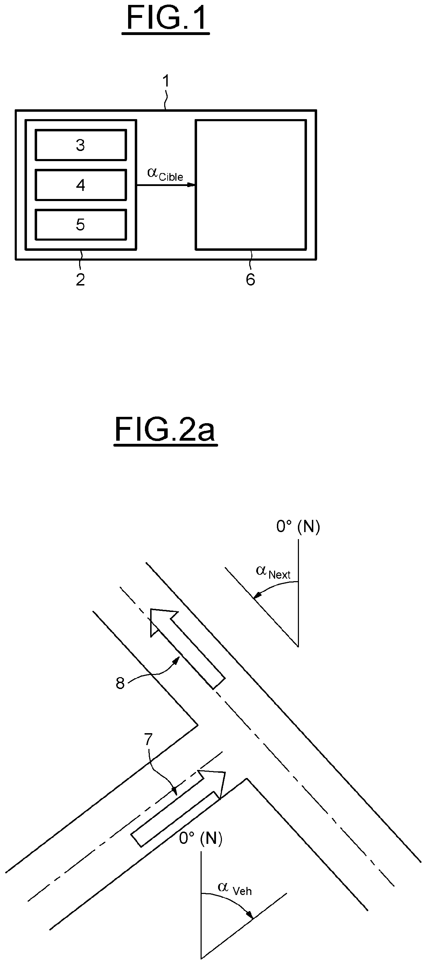

On se référera tout d'abord à la figure 1 qui illustre schématiquement un système d'aide à la navigation conforme à l'invention.

Ce système 1 est destiné à être embarqué à bord d'un véhicule automobile pour procurer une aide à la navigation lorsque le véhicule opère un changement de direction, d'une première direction à une deuxième direction.

Ce système 1 comporte un dispositif de calcul d'angle cible $\alpha_{Cible}$ 2 comportant au moins une cartographie terrestre 3, un capteur d'orientation 4 et un calculateur 5 apte à calculer l'angle cible $\alpha_{Cible}$ entre la position instantanée du véhicule et un point fixe de la cartographie terrestre situé dans la deuxième direction.

Le système d'aide à la navigation 1 comporte en outre un dispositif de restitution visuelle 6, recevant l'angle cible $\alpha_{Cible}$ et produisant une zone d'éclairage sensiblement linéaire située au sein du véhicule dans le champ de vision principal ou périphérique du conducteur. Cette information visuelle fournie par la zone d'éclairage est adaptée pour indiquer en continu la direction vers ledit point fixe en fonction de la valeur de l'angle cible $\alpha_{Cible}$.

Le dispositif de calcul d'angle cible $\alpha_{Cible}$ peut avantageusement être implémenté dans un dispositif mobile, par exemple un smartphone ou une tablette, relié à un réseau, par exemple CAN (« Controller Area Network »), du véhicule par un protocole de communication avec ou sans fil dont le véhicule est équipé, par exemple Bluetooth ou MirrorLink.

En référence à la figure 2a qui illustre la définition de deux azimuts importants, on va maintenant décrire la procédure de calcul de l'angle cible $\alpha_{Cible}$.

Le premier azimut $\alpha_{Veh}$ correspond à l'azimut de la direction courante 7 du véhicule selon l'axe de conduite, par convention référencé par rapport au nord dans le sens des aiguilles d'une montre. Cet azimut $\alpha_{Veh}$ est actualisé en temps réel via le capteur d'orientation 4 intégré dans le véhicule ou dans le dispositif mobile. Cette direction est appelée ici la première direction 7.

Le deuxième azimut $\alpha_{Next}$ correspond à l'azimut de la direction, appelée la deuxième direction 8, après le prochain changement de direction proposé par le système d'aide à la navigation selon la cartographie terrestre. Par convention, cet azimut est également référencé par rapport au nord dans le sens des aiguilles d'une montre. L'azimut $\alpha_{Next}$ indiqué dans la figure 2a a donc une valeur négative.

Comme l'azimut $\alpha_{Next}$ ne dépend que de la cartographie terrestre 3 qui est par définition statique, le dispositif de calcul d'angle cible 2 peut avantageusement continuer à fonctionner en cas de perte momentanée des signaux GPS.

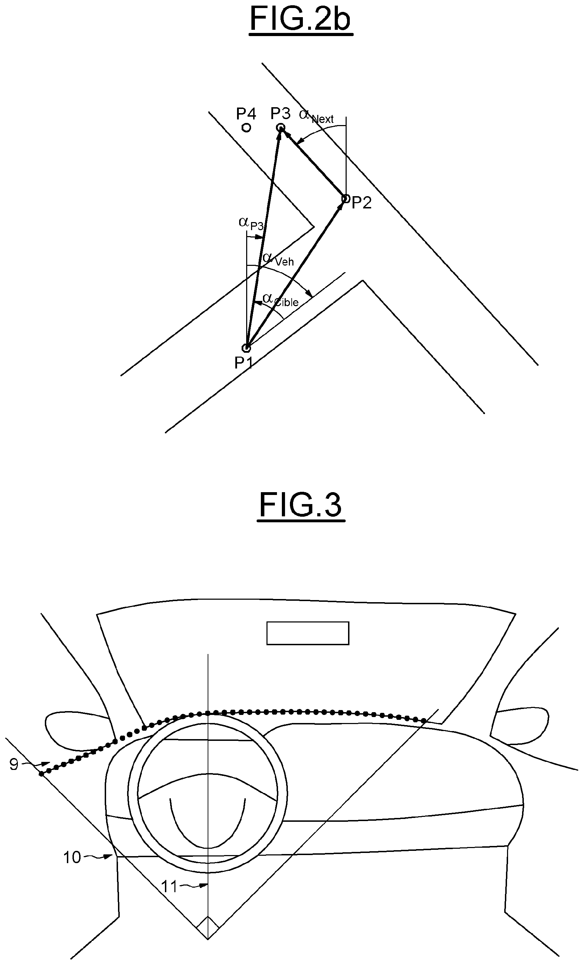

La figure 2b montre la définition de l'angle cible $\alpha_{Cible}$ correspondant à la deuxième direction 8, selon la cartographie terrestre, par rapport à l'axe de conduite du véhicule suivant la première direction 7. Par définition, cet angle cible $\alpha_{Cible}$ n'est pas un azimut et n'est donc pas repéré par rapport au nord.

Selon un procédé d'aide à la navigation, on définit sur la cartographie terrestre 3 un premier point mobile P1 correspondant à la position courante du véhicule, un premier point fixe P2 correspondant au croisement du changement de direction, un deuxième point fixe P3 de la deuxième direction défini par l'azimut fixe $\alpha_{Next}$, situé à une distance déterminée du premier point fixe P2 et un deuxième point mobile P4 placé à l'abscisse x1 du premier point mobile P1 et à l'ordonnée y3 du deuxième point fixe P3.

La distance entre le premier point mobile P1 et le premier point fixe P2 est définie comme $D_{Next}$. La distance déterminée entre le premier point fixe P2 et le deuxième point fixe P3 est appelée ici *Offset* et peut avoir par exemple une value de deux mètres ou cinq mètres.

Cette distance *Offset* est utilisée pour définir le deuxième point fixe P3, appelé également « cible », qui comprend un point visé par le dispositif de restitution visuelle selon l'invention.

Les deux points fixes P2 et P3 sont par définition statiques et fournis par le système d'aide à la navigation uniquement à chaque nouveau changement de direction.

En connaissant $D_{Next}= \|\overrightarrow{P1P2}\|$, P1(x1, y1), P2(x2, y2), $Offset = \|\overrightarrow{P2P3}\|$ et l'azimut $\alpha_{Next}$, on calcule pour P3(x3, y3) :

$$x3 = x2 + Offset \times \sin(\alpha_{Next})$$

$$y3 = y2 + Offset \times \cos(\alpha_{Next})$$

$$\|\overrightarrow{P1P3}\| = \sqrt{(x3-x1)^2 + (y3-y1)^2}$$

Par ailleurs, on calcule également l'angle $\alpha_{P3}$ visible sur la figure 2b, représentant l'azimut du vecteur $\overrightarrow{P1P3}$ et repéré par rapport au nord:

$$\alpha_{P3} = arccos\left(\frac{\|\overrightarrow{P1P4}\|}{\|\overrightarrow{P1P3}\|}\right).$$

Enfin, l'angle cible $\alpha_{Cible}$ est défini par :

$$\alpha_{Cible} = \alpha_{P3} - \alpha_{Veh}$$

Il convient de noter que $\alpha_{Cible} < 0$ indique la prochaine direction vers la gauche, $\alpha_{Cible} > 0$ indique la prochaine direction vers la droite et $\alpha_{Cible} = 0$ indique que le véhicule se déplace déjà dans la direction de la « prochaine direction » proposée par le système d'aide à la navigation. Ce dernier cas, $\alpha_{Cible} = 0$, est aussi un signe d'une « fin de manoeuvre » lorsque le véhicule vient de terminer un changement de direction. La distance *Offset* est définie avantageusement pour indiquer au conducteur que le véhicule se déplace sur la bonne direction lorsque le véhicule vient de passer le croisement P2 du changement de direction.

La position du véhicule P1, étant le seul élément dépendant des signaux GPS pour calculer l'angle cible $\alpha_{Cible}$, est corrélée avec l'odométrie du véhicule qui fournit notamment la vitesse du véhicule. Ainsi, en cas de perte temporaire des signaux GPS, le dispositif de calcul d'angle de cible $\alpha_{Cible}$ garde une précision suffisante et continue à offrir les indications de prochain changement de direction.

De plus, on définit un délai $T_{Next}$ correspondant au temps restant avant le changement de direction, calculé par le calculateur en utilisant des informations odométriques, notamment la vitesse du véhicule. Ce délai $T_{Next}$ est utilisé comme signal de contrôle du dispositif de restitution visuelle pour déterminer son activation afin de limiter les contextes de conduite et simplifier l'acquisition et l'interprétation de l'information pour le conducteur. Le dispositif de restitution visuelle est activé uniquement lorsque ledit délai est inférieur à un seuil temporel $T_{Max}$.

En effet, l'utilisation de ce seuil de déclenchement temporel $T_{Max}$ permet de prendre compte la vitesse du véhicule via des informations odométriques disponibles sur le réseau CAN du véhicule. Plus le véhicule se déplace vite, par exemple en déplacement sur autoroute, plus le dispositif de restitution visuelle sera activé tôt. Inversement, plus le véhicule se déplacement lentement, par exemple en ville, plus le dispositif de restitution visuelle est activé tard. Une telle configuration étant cohérente avec une prise en compte de la charge cognitive du conducteur permet de rendre le système d'aide à la navigation le moins perturbant possible au conducteur.

On se réfère maintenant à la figure 3 pour illustrer un mode de réalisation du dispositif de restitution visuelle selon l'invention. La zone d'éclairage 9 du dispositif de restitution visuelle peut être installée en partie supérieure de la planche de bord du véhicule et en partie supérieure du panneau de porte du conducteur, de manière à ce que la lumière produite par la zone d'éclairage 9 soit perceptible dans le champ de vision 10 principal ou périphérique du conducteur mais sans beaucoup perturber le conducteur sur sa conduite.

La zone d'éclairage 9 du dispositif de restitution visuelle est avantageusement configurée pour couvrir un champ de vision 10 suffisamment large, ici 90°, centré sur l'axe de conduite 11. Compte-tenue le champ de vision 10 périphérique dans lequel le conducteur perçoit des informations étant d'au moins 150°, la zone d'éclairage 9 peut s'étendre pour couvrir un champ de vision 10 encore plus large.

La zone d'éclairage 9 du dispositif de restitution visuelle 6 illustrée sur la figure 3 comporte une pluralité de composants d'éclairage individuels, ici au nombre de 27. Les composants d'éclairage sont indexés de 0 à 26 ici, de gauche à droite.

Dans un mode d'implémentation, les composants d'éclairage du dispositif de restitution visuelle 6 sont à base de LEDs et d'un diffuseur optique.

Par exemple, chaque composant d'éclairage émet selon un angle compris entre -45° et 45°. A partir de l'angle cible $\alpha_{Cible}$ calculé en continu et du signal d'activation selon le délai $T_{Next}$, le dispositif de restitution visuelle 6 commande l'éclairage instantané du seul composant d'éclairage individuel correspondant à la direction instantanée $\alpha_{Cible}$ vers le deuxième point fixe P3 dit « cible ».

Lorsque le dispositif de restitution visuelle 6 est activé et l'angle cible $\alpha_{Cible}$ est en dehors du champ visuel couvert par la zone d'éclairage, ici de -45° à 45°, on éclaire et on fait clignoter une zone d'extrémité à l'extérieur de la zone d'éclairage du dispositif de restitution visuelle.

Plus précisément, pour les valeurs $\alpha_{Cible}$ inférieures à -45°, par exemple dans le cas d'un demi-tour avec un angle cible $\alpha_{Cible}$ proche de -180°, le composant d'éclairage d'index 0 à gauche est éclairé et clignote. Pour les valeurs $\alpha_{Cible}$ supérieures à 45°, le composant d'éclairage d'index 26 à droite est éclairé et clignote. Pour les autres cas, on éclaire le composant d'éclairage angulairement le plus proche de l'angle cible ($\alpha_{Cible}$).

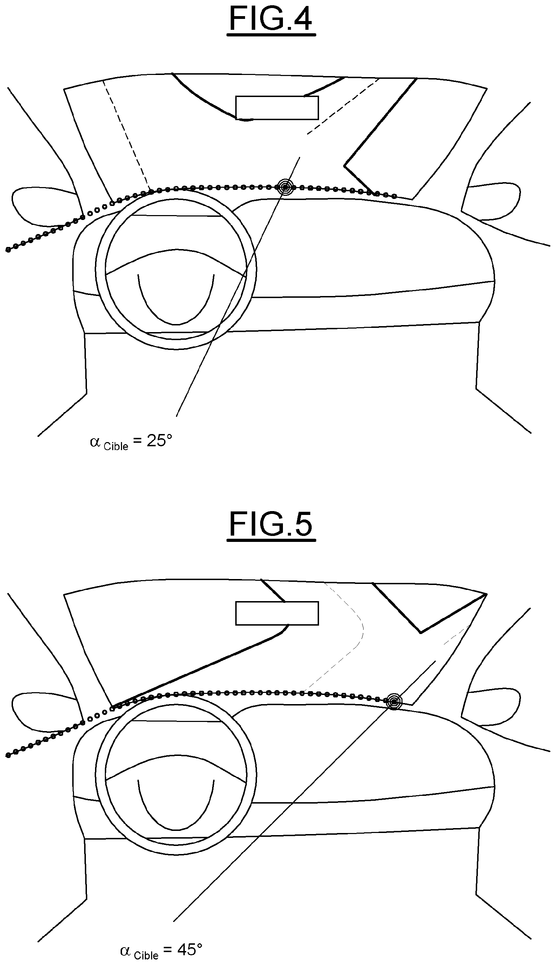

La figure 4 montre une situation dans laquelle un véhicule est à proximité d'un croisement d'un changement de direction proposé par le système d'aide à la navigation 1. Le dispositif de restitution visuelle 6 éclaire le composant d'éclairage correspondant à l'angle cible $\alpha_{Cible}$, ici 25°. Le conducteur reçoit donc une indication d'un changement de direction au prochain croisement, à droite.

Lorsque le véhicule s'approche du croisement, l'angle cible $\alpha_{Cible}$ devient plus grand. Par exemple $\alpha_{Cible}$ = 45°, comme illustré sur la figure 5. Le conducteur commence la manoeuvre et tourne à droite.

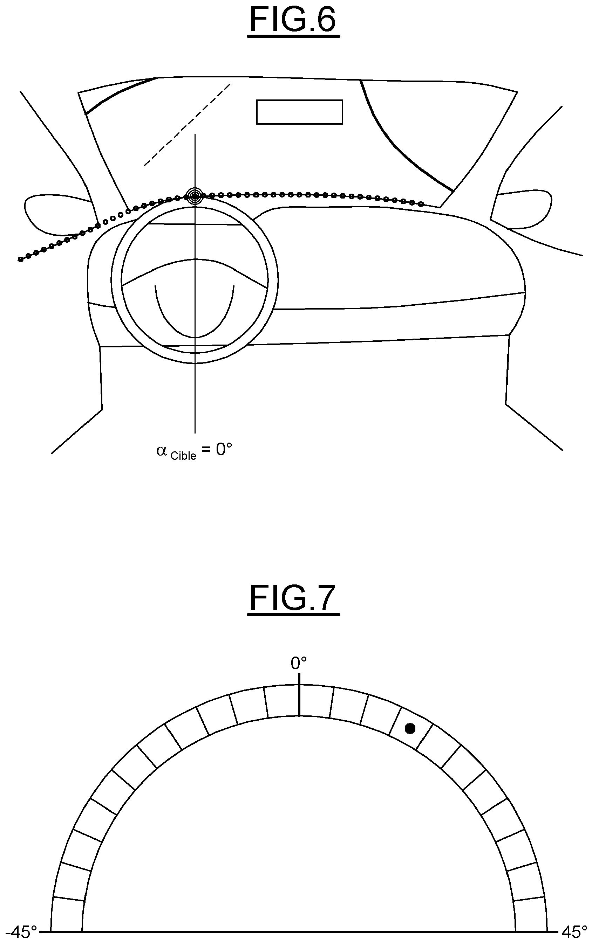

La figure 6 illustre une situation dans laquelle le changement de direction est terminé. Le composant d'éclairage éclairé revient dans l'axe de conduite 11 pour confirmer au conducteur que le véhicule se déplace vers la bonne direction.

Selon le seuil de déclenchement temporel $T_{Max}$ et le délai $T_{Next}$, le dispositif restitution visuelle 6 peut être désactivé temporellement jusqu'à l'approche d'un prochain changement de direction afin de minimiser la charge cognitive nécessaire à l'acquisition et à l'interprétation de l'information par le conducteur.

Par ailleurs, la mise en oeuvre du système d'aide à la navigation 1 selon l'invention reste très simple. Le dispositif de calcul d'angle cible peut être intégré directement à l'architecture existante du véhicule et le dispositif de restitution visuelle nécessite une retouche modérée en partie supérieure de la planche de bord du véhicule et en partie supérieure du panneau de porte du conducteur.

L'invention n'est toutefois pas limitée aux modes de réalisation qui viennent d'être décrits.

Ainsi alors que ce dispositif de restitution visuelle 6 décrit comporte une zone d'éclairage 9 installée en partie supérieure de la planche de bord du véhicule et en en partie supérieure du panneau de porte du conducteur, il est possible de prévoir une zone d'éclairage 9 comprenant un cadran ou un demi-cadran sectorisé par une pluralité de cases représentant au moins un angle compris entre -90° et 90°, l'angle cible $\alpha_{Cible}$ étant indiqué par un symbole, par exemple un disque rond tel, que représenté dans la figure 7.

En variante, il est également possible d'afficher le cadran ou le demi-cadran sur l'un des écrans disponibles dans le véhicule, de préférence le tableau de bord ou un affichage tête haute, ou dans un dispositif mobile, par exemple un smartphone ou une tablette, relié au réseau CAN du véhicule par un protocole de communication sans fil dont le véhicule est équipé, Bluetooth ou MirrorLink par exemple.

Dans une implémentation optimale, un capteur de lumière peut être installé dans le véhicule et configuré pour moduler l'intensité lumineuse de la zone d'éclairage 9 du dispositif de restitution visuelle 6 suivant le flux lumineux reçu de l'extérieur.

## Revendications

1. Système d'aide à la navigation (1) lors d'un changement de direction d'une première direction (7) vers une deuxième direction (8), comprenant un dispositif de calcul d'angle cible (2) comportant au moins une cartographie terrestre (3), un capteur d'orientation (4) et un calculateur (5) apte à calculer un angle cible ($\alpha_{Cible}$) entre la position instantanée du véhicule (7) et un point fixe (P3) de la cartographie terrestre (3) situé dans la deuxième direction (8), ledit système comprenant en outre un dispositif de restitution visuelle (6) recevant l'angle cible ($\alpha_{Cible}$) et comportant une zone d'éclairage (9) sensiblement linéaire située au sein du véhicule dans le champ de vision (10) principal ou périphérique du conducteur, l'information visuelle produite par la zone d'éclairage (9) étant adaptée pour indiquer en continu la direction vers ledit point fixe (P3) en fonction de la valeur de l'angle cible ($\alpha_{Cible}$), le système étant **caractérisé en ce que** le dispositif de restitution visuelle (6) est activé uniquement lorsqu'un délai ($T_{Next}$) est inférieur à un seuil ($T_{Max}$), ledit délai ($T_{Next}$) correspondant au temps restant avant le changement de direction et étant calculé par un calculateur en utilisant des informations odométriques.

2. Système d'aide à la navigation (1) selon la revendication 1, dans lequel le dispositif de calcul d'angle cible (2) est implémenté dans un dispositif mobile, par exemple un smartphone ou une tablette, relié à un réseau du véhicule, Bluetooth ou MirrorLink par exemple.

3. Système d'aide à la navigation (1) selon la revendication 1 ou 2, dans lequel la zone d'éclairage (9) du dispositif de restitution visuelle (6) est installée en partie supérieure de la planche de bord du véhicule et en partie supérieure du panneau de porte du conducteur et configurée pour couvrir un champ visuel (9) d'au moins 90°.

4. Système d'aide à la navigation (1) selon la revendication 3, dans lequel la zone d'éclairage (9) du dispositif de restitution visuelle (6) comporte une pluralité de composants d'éclairage individuels, le dispositif de restitution visuelle (6) étant adapté pour commander l'éclairage instantané du seul composant d'éclairage individuel correspondant à la direction instantanée vers le point fixe.

5. Système d'aide à la navigation (1) selon la revendication 4, dans lequel les composants d'éclairage du dispositif de restitution visuelle (6) sont à base de LEDs et d'un diffuseur optique.

6. Système d'aide à la navigation (1) selon la revendication 1 ou 2, dans lequel la zone d'éclairage (9) du dispositif de restitution visuelle (9) comprend un cadran ou un demi-cadran sectorisé par une pluralité de cases représentant au moins un angle compris entre -90° et 90° et affiché sur un écran de préférence le tableau de bord ou un affichage tête haute, ou dans un dispositif mobile relié à un réseau du véhicule, Bluetooth ou MirrorLink par exemple.

7. Système d'aide à la navigation (1) selon l'une quelconque des revendications 1 à 6, dans lequel un capteur de lumière est installé dans le véhicule et configuré pour moduler l'intensité lumineuse de la zone d'éclairage (9) du dispositif de restitution visuelle (6), suivant le flux lumineux reçu de l'extérieur.

8. Procédé d'aide à la navigation lors d'un changement de direction d'une première direction (7) vers une deuxième direction (8), dans lequel on définit sur une cartographie terrestre (3) un premier point fixe (P2) au croisement du changement de direction et un deuxième point fixe (P3) à une distance déterminée du premier point dans la deuxième direction (8), on calcule un angle cible ($\alpha_{Cible}$) instantané entre la position instantanée du véhicule (P1) et le deuxième point fixe (P3), on éclaire une zone d'éclairage (9) spécifique au sein du véhicule, correspondant à l'angle cible ($\alpha_{Cible}$) instantané dans le champ de vision (10) principal ou périphérique du conducteur, ledit procédé étant **caractérisé en ce qu'**on définit un délai ($T_{Next}$) correspondant au temps restant avant le changement de direction, en utilisant des informations odométriques et on active le dispositif de restitution visuelle (6) uniquement lorsque ledit délai ($T_{Next}$) est inférieur à un seuil ($T_{Max}$).

9. Procédé d'aide à la navigation selon la revendication 8, dans lequel on éclaire et fait clignoter une zone d'extrémité à l'extérieur de la zone d'éclairage (9) du dispositif de restitution visuelle (6) tant que la valeur absolue de l'angle cible ($\alpha_{Cible}$) instantané est supérieure à l'angle maximum du champ visuel (10) couvert par la zone d'éclairage (9), et on éclaire une zone de la zone d'éclairage (9) angulairement la plus proche de l'angle cible ($\alpha_{Cible}$) dans les autres cas, lorsque le dispositif de restitution visuelle (6) est activé.

**Patentansprüche**

1. System zur Navigationshilfe (1) bei einer Richtungsänderung von einer ersten Richtung (7) zu einer zweiten Richtung (8), das eine Zielwinkelberechnungsvorrichtung (2) enthält, die mindestens eine terrestrische Kartographie (3), einen Ausrichtungssensor (4) und einen Rechner (5) aufweist, der einen Zielwinkel ($\alpha_{cible}$) zwischen der augenblicklichen Position des Fahrzeugs (7) und einem ortsfesten Punkt (P3) der terrestrischen Kartographie (3) berechnen kann, der sich in der zweiten Richtung (8) befindet, wobei das System außerdem eine visuelle Wiedergabevorrichtung (6) enthält, die den Zielwinkel ($\alpha_{cible}$) empfängt und eine im Wesentlichen lineare Beleuchtungszone (9) aufweist, die sich innerhalb des Fahrzeugs im Haupt- oder peripheren Sichtfeld (10) des Fahrers befindet, wobei die von der Beleuchtungszone (9) erzeugte visuelle Information geeignet ist, durchgehend die Richtung zum ortsfesten Punkt (P3) abhängig vom Wert des Zielwinkels ($\alpha_{cible}$) anzuzeigen, wobei das System **dadurch gekennzeichnet ist, dass** die visuelle Wiedergabevorrichtung (6) nur aktiviert wird, wenn eine Verzögerung ($T_{Next}$) geringer ist als eine Schwelle ($T_{Max}$), wobei die Verzögerung ($T_{Next}$) der verbleibenden Zeit vor der Richtungsänderung entspricht und von einem Rechner unter Verwendung odometrischer Informationen berechnet wird.

2. Navigationshilfesystem (1) nach Anspruch 1, wobei die Zielwinkelberechnungsvorrichtung (2) in eine bewegliche Vorrichtung, zum Beispiel ein Smartphone oder ein Tablet-PC, eingebaut ist, die mit einem Netzwerk des Fahrzeugs verbunden ist, zum Beispiel Bluetooth oder MirrorLink.

3. Navigationshilfesystem (1) nach Anspruch 1 oder 2, wobei die Beleuchtungszone (9) der visuellen Wiedergabevorrichtung (6) im oberen Teil des Armaturenbretts des Fahrzeugs und im oberen Bereich der Türverkleidung auf der Fahrerseite installiert und konfiguriert ist, ein Sichtfeld (9) von mindestens 90° abzudecken.

4. Navigationshilfesystem (1) nach Anspruch 3, wobei die Beleuchtungszone (9) der visuellen Wiedergabevorrichtung (6) eine Vielzahl einzelner Beleuchtungsbauteile aufweist, wobei die visuelle Wiedergabevorrichtung (6) geeignet ist, die augenblickliche Beleuchtung nur des einzelnen Beleuchtungsbauteils zu steuern, das der augenblicklichen Richtung zum ortsfesten Punkt entspricht.

5. Navigationshilfesystem (1) nach Anspruch 4, wobei die Beleuchtungsbauteile der visuellen Wiedergabevorrichtung (6) auf der Basis von LEDs und eines optischen Diffusors sind.

6. Navigationshilfesystem (1) nach Anspruch 1 oder 2, wobei die Beleuchtungszone (9) der visuellen Wiedergabevorrichtung (9) eine Skalenscheibe oder eine halbe Skalenscheibe enthält, die von einer Vielzahl von Feldern in Sektoren aufgeteilt wird, die mindestens einen Winkel zwischen -90° und 90° darstellen, und auf einem Bildschirm angezeigt wird, vorzugsweise dem Armaturenbrett oder einer Heap-Up-Anzeige, oder in einer beweglichen Vorrichtung, die mit einem Netzwerk des Fahrzeugs, zum Beispiel Bluetooth oder MirrorLink, verbunden ist.

7. Navigationshilfesystem (1) nach einem der Ansprüche 1 bis 6, wobei ein Lichtsensor im Fahrzeug installiert und konfiguriert ist, die Lichtstärke der Beleuchtungszone (9) der visuellen Wiedergabevorrichtung (6) gemäß dem von außen empfangenen Lichtstrom zu modulieren.

8. Navigationshilfeverfahren bei einer Richtungsänderung von einer ersten Richtung (7) zu einer zweiten Richtung (8), wobei auf einer terrestrischen Kartographie (3) ein erster ortsfester Punkt (P2) an der Kreuzung der Richtungsänderung und ein zweiter ortsfester Punkt (P3) in einem bestimmten Abstand zum ersten Punkt in der zweiten Richtung (8) definiert wird, ein augenblicklicher Zielwinkel ($\alpha_{cible}$) zwischen der augenblicklichen Position des Fahrzeugs (P1) und dem zweiten ortsfesten Punkt (P3) berechnet wird, eine spezielle Beleuchtungszone (9) innerhalb des Fahrzeugs beleuchtet wird, die dem augenblicklichen Zielwinkel ($\alpha_{cible}$) im Haupt- oder peripheren Sichtfeld (10) des Fahrers entspricht, wobei das Verfahren **dadurch gekennzeichnet ist, dass** eine Verzögerung ($T_{Next}$) definiert wird, die der verbleibenden Zeit vor der Richtungsänderung entspricht, unter Verwendung odometrischer Informationen, und die visuelle Wiedergabevorrichtung (6) nur aktiviert wird, wenn die Verzögerung ($T_{Next}$) unter einer Schwelle ($T_{Max}$) liegt.

9. Navigationshilfeverfahren nach Anspruch 8, wobei ein Endbereich außerhalb der Beleuchtungszone (9) der visuellen Wiedergabevorrichtung (6) beleuchtet und zum Blinken gebracht wird, so lange der Absolutwert des augenblicklichen Zielwinkels ($\alpha_{cible}$) höher als der maximale Winkel des von der Beleuchtungszone (9) abgedeckten Sichtfelds (10) ist, und in den anderen Fällen eine Zone der Beleuchtungszone (9) beleuchtet wird, die winkelmäßig dem Zielwinkel ($\alpha_{cible}$) am nächsten ist, wenn die visuelle Wiedergabevorrichtung (6) aktiviert ist.

**Claims**

1. System for aiding navigation (1) during a change of direction from a first direction (7) to a second direction (8), including a device for calculating a target angle (2) including at least one terrestrial map (3), an orientation sensor (4) and a computer (5) able to calculate a target angle ($\alpha_{Target}$) between the instantaneous position of the vehicle (7) and a fixed point (P3) of the terrestrial map (3) situated in the second direction (8), said system further including a visual output device (6) receiving the target angle ($\alpha_{Target}$) and including a substantially linear lighting zone (9) situated within the vehicle in the principal or peripheral field of vision (10) of the driver, the visual information produced by the lighting zone (9) being adapted to indicate continuously the direction towards said fixed point (P3) as a function of the value of the target angle ($\alpha_{Target}$), the system being **characterized in that** the visual output device (6) is activated only if a delay ($T_{next}$) is below a threshold ($T_{max}$), said delay ($T_{next}$) corresponding to the remaining time before the change of direction and being calculated by a computer using odometer information.

2. Navigation aid system (1) according to Claim 1, in which the target angle calculation device (2) is implemented in a mobile device, for example a smartphone or a tablet, connected to a network of the vehicle, for example a Bluetooth or MirrorLink network.

3. Navigation aid system (1) according to Claim 1 or 2, in which the lighting zone (9) of the visual output device (6) is installed in the upper part of the dashboard of the vehicle and in the upper part of the driver's door panel and configured to cover a visual field (9) of at least 90°.

4. Navigation aid system (1) according to Claim 3, in which the lighting zone (9) of the visual output device (6) includes a plurality of individual lighting components, the visual output device (6) being adapted to control the instantaneous lighting up of the only individual lighting component corresponding to the instantaneous direction toward the fixed point.

5. Navigation aid system (1) according to Claim 4, in which the lighting components of the visual output device (6) are based on LEDs and an optical diffuser.

6. Navigation aid system (1) according to Claim 1 or 2, in which the lighting zone (9) of the visual output device (9) includes a dial or a half-dial divided into sectors by a plurality of boxes representing at least one angle between -90° and 90° inclusive and displayed on a screen, preferably the dashboard or a head-up display, or in a mobile device connected to a network of the vehicle, for example a Bluetooth or MirrorLink network.

7. Navigation aid system (1) according to any one of Claims 1 to 6, in which a light sensor is installed in the vehicle and configured to modulate the luminous intensity of the lighting zone (9) of the visual output device (6) in accordance with the luminous flux received from the outside.

8. Method for aiding navigation during a change of direction from a first direction (7) to a second direction (8), in which there is defined on a terrestrial map (3) a first fixed point (P2) at the crossing of the change of direction and a second fixed point (P3) at a particular distance from the first point in the second direction (8), an instantaneous target angle ($\alpha_{Target}$) between the instantaneous position (P1) of the vehicle and the second fixed point (P3) is calculated, and a specific lighting zone (9) inside the vehicle corresponding to the instantaneous target angle ($\alpha_{Target}$) in the principal or peripheral field of view (10) of the driver is lit up, said method being **characterized in that** a delay ($T_{next}$) corresponding to the remaining time before the change of direction is defined using odometer information and the visual output device (6) is activated only if said delay ($T_{next}$) is below a threshold ($T_{max}$).

9. Navigation aid method according to Claim 8, in which an end zone outside the lighting zone (9) of the visual output device (6) is lit up and caused to blink if the absolute value of the instantaneous target angle ($\alpha_{Target}$) is greater than the maximum angle of the visual field (10) covered by the lighting zone (9), and a zone of the lighting zone (9) angularly closest to the target angle ($\alpha_{Target}$) is lit up otherwise, when the visual output device (6) is activated.

## FIG.1

## FIG.2a

# FIG.2b

# FIG.3

## FIG.4

$\alpha_{Cible} = 25°$

## FIG.5

$\alpha_{Cible} = 45°$

## FIG.6

$\alpha_{Cible} = 0°$

## FIG.7

0°

-45°                                        45°

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5964821 A